# EUROPÄISCHE PATENTSCHRIFT

(11) **EP 3 390 981 B1**
(45) Veröffentlichungstag und Bekanntmachung des Hinweises auf die Patenterteilung: **16.03.2022**
(21) Anmeldenummer: 16795105.2
(22) Anmeldetag: 15.11.2016
(51) Int. Cl.: G01F 23/26, G01F 23/24

(54) **SENSORADAPTER**
SENSOR ADAPTER
ADAPTATEUR DE CAPTEUR

(30) Priorität: 18.12.2015 DE 102015122177
(43) Veröffentlichungstag der Anmeldung: 24.10.2018
(73) Patentinhaber: Endress+Hauser SE+Co. KG, 79689 Maulburg (DE)
(72) Erfinder: WERNET, Armin, 79618 Rheinfelden (DE); UPPENKAMP, Kaj, 79664 Wehr (DE); SCHMIDT, Robert, 79650 Schopfheim (DE); FRÜHAUF, Dietmar, 79539 Lörrach (DE)
(74) Vertreter: Andres, Angelika Maria
(86) Internationale Anmeldenummer: PCT/EP2016/077733
(87) Internationale Veröffentlichungsnummer: WO 2017/102215

(56) Entgegenhaltungen:
- DE-A1-102004 060 119
- DE-A1-102012 203 400
- DE-U1- 20 313 695
- DE-U1-202009 009 048
- GB-A- 2 113 402
- JP-A- S5 748 616
- US-A- 4 799 174
- US-A- 5 391 839

## Beschreibung

Die Erfindung betrifft einen Sensoradapter mit zumindest einer Adapter-Messsonde und eine Vorrichtung mit zumindest einer Messsonde zur Überwachung und/oder Bestimmung zumindest einer Prozessgröße, insbesondere eines vorgegebenen Füllstandes, eines Mediums in einem Behälter.

Ein vorgegebener Füllstand kann beispielsweise mittels des konduktiven Messverfahrens überwacht werden. Das zugrundeliegende Messprinzip ist aus einer Vielzahl von Veröffentlichungen bekannt. Der Füllstand wird überwacht, indem erkannt wird, ob über das leitfähige Medium ein elektrischer Kontakt zwischen einer Sondenelektrode und der Wandung eines leitfähigen Behälters oder einer zweiten Elektrode besteht. Entsprechende Feldgeräte werden von der Anmelderin beispielsweise unter der Bezeichnung Liquipoint vertrieben.

Die Füllstanddetektion mittels eines konduktiven Messverfahrens stößt an seine Grenzen, wenn das zu überwachende Medium quasi keine elektrische Leitfähigkeit (< 1 µS/cm) oder nur eine sehr geringe Leitfähigkeit aufweist. Bei diesen mit einem konduktiven Messverfahren schwer zu überwachenden Medien handelt es sich z.B. um destilliertes Wasser, Melasse oder Alkohole. Weiterhin problematisch sind Medien mit einer elektrischen Leitfähigkeit kleiner 1µS/cm und einer Dielektrizitätskonstanten kleiner 20. In diesen Bereich fallen insbesondere Öle und Fette. Eine Änderung der Leitfähigkeit des Mediums im Verhältnis zur Leitfähigkeit von Luft ist dann zu gering, um noch sicher von der jeweiligen Elektronik erfasst werden zu können

Hier eignet sich das kapazitive Messverfahren, welches ebenfalls im Stand der Technik bekannt ist. Dabei wird der Füllstand des Mediums aus der Kapazität des von einer Sondenelektrode und der Wandung des Behälters oder einer zweiten Elektrode gebildeten Kondensators ermittelt. Je nach Leitfähigkeit des Mediums bildet hierbei entweder das Medium selbst oder eine Sondenisolierung das Dielektrikum des Kondensators. Auch auf dem kapazitiven Messprinzip beruhende Feldgeräte werden von der Anmeldung in vielen unterschiedlichen Ausgestaltungen vertrieben, beispielsweise unter der Bezeichnung Liquicap oder Solicap.

Die Füllstandsdetektion mittels eines kapazitiven Messverfahrens ist zwar prinzipiell für leitfähige und nicht leitfähige Medien möglich, jedoch wird für Medien mit zunehmender Leitfähigkeit vorzugsweise eine Isolation der Messsonde notwendig, da das Medium sonst einen Kurzschluss des Messkreises bewirkt. Die Impedanz dieser Isolierung, insbesondere die der nachfolgend beschriebenen Guardelektrode, ist jedoch für anhaftende Medien nachteilig, da sie eine zusätzlich in Reihe geschaltete Impedanz zum Medium darstellt.

Zur Vermeidung von Ansatzbildung ist aus der DE 32 12 434 C2 die Verwendung eine Guardelektrode bekannt geworden, welche die Sensorelektrode koaxial umgibt und auf dem gleichen elektrischen Potential wie diese liegt. Je nach Beschaffenheit des Ansatzes zeigt sich bei dieser Ausgestaltung das Problem, das Guardsignal passend zu erzeugen. Erweiternd wird in der DE 10 2006 047 780 A1 eine Messsonde mit einer Verstärkungseinheit und einem Begrenzungselement beschrieben, die über einen großen Messbereich hinweg unempfindlich ist gegenüber Ansatzbildung ist. Zudem hat die DE 10 2008 043 412 A1 ein Füllstandsmessgerät mit einer Speichereinheit zum Gegenstand, auf welcher Grenzwerte für unterschiedliche Medien abgelegt sind. Bei Über- oder Unterschreiten eines solchen Grenzwertes wird ein Schaltsignal erzeugt derart, dass eine Ansatzbildung das zuverlässige Schalten nicht beeinflusst.

Um eine Prozessgröße, insbesondere einen vorgegebenen Füllstand, eines Mediums mit einem einzigen Messgerät unabhängig von den elektrischen Eigenschaften des Mediums erfassen zu können, ist aus der DE102011004807A1 eine Sondeneinheit mit zumindest abschnittsweise koaxialem Aufbau für eine Vorrichtung zur kapazitiven oder konduktiven Bestimmung zumindest einer Prozessgröße eines Mediums in einem Behälter. Diese Sondeneinheit kann im Wesentlichen frontbündig in einen Behälter eingebaut werden, was insbesondere in Bezug auf hygienische Standards, welche für bestimmte Anwendungen eingehalten werden müssen, von Vorteil.

Ein derartiger Multisensor ist auch Gegenstand der DE102013102055A1, welche ein Verfahren und eine Vorrichtung beschreibt, mittels welchem ein vorgegebener Füllstand abwechselnd in einem konduktiven und einem kapazitiven Betriebsmodus bestimmt werden kann. Ähnlich werden in der DE102013104781A1 ein Verfahren und eine Vorrichtung offenbart, die die Überwachung zumindest einer medienspezifischen Eigenschaft eines Mediums in einem kapazitiven und konduktiven Betriebsmodus erlauben.

Aus JPS5748616A ist ein Sensor bekannt geworden, die einen einfachen Austausch von Sensorelektroden erlaubt. DE20313695U1 beschreibt eine Adaptereinheit für ein Feldgerät, welche zwischen dem Sensor und der Elektronikeinheit angeordnet ist. Dagegen offenbart DE102012203400A1 ein kapazitives Füllstandsmessgerät und einen Adapter, in welchen das Messgerät eingeschraubt wird und US4799174A ein System zur Überwachung einer vorgegebenen Kondition eines Materials.

Insbesondere im kapazitiven Betriebsmodus, hängt die erreichbare Messauflösung empfindlich von der geometrischen Ausgestaltung der Messsonde, durch welche der Bereich der jeweils messbaren Kapazitäten festgelegt wird. Wenn die Messsonde beispielsweise frontbündig ausgestaltet ist, derart dass sie nach Einbau in der Wandung des Behälters im Wesentlichen mit dieser abschließt, wie bei der von der Anmelderin unter dem Namen FTW33 vertriebenen Variante, können die gemessenen Kapazitäten im Bereich von Femtofarad liegen. Dies birgt gegebenenfalls Probleme in Bezug auf die Messauflösung bei Medien mit Dielektrizitätskonstanten von DK≤2. Insbesondere sind davon Feststoffe, wie beispielsweise Kaffeepulver, Milchpulver oder auch Kakao betroffen, da diese nur eine geringe Leitfähigkeit aufweisen und in Form eines Gemisches aus dem jeweiligen Pulver und Luft vorliegen.

Der Erfindung liegt deshalb die Aufgabe zugrunde, den Anwendungsbereich für nach dem kapazitiven und/oder konduktiven Messverfahren arbeitende Messsonden zu erweitern.

Diese Aufgabe wird erfindungsgemäß gelöst durch einen Sensoradapter für eine nach dem kapazitiven und/oder konduktiven Messprinzip arbeitenden Vorrichtung zur Bestimmung und/oder Überwachung zumindest einer Prozessgröße eines Mediums in einem Behälter mit einer Messsonde umfassend eine Sensorelektrode und eine Guardelektrode, wobei der Sensoradapter zumindest
- eine Adapter-Messsonde mit zumindest einer Adapter-Sensorelektrode und einer Adapter-Guardelektrode, wobei die Adapter-Messsonde eine sich von der Geometrie der Messsonde unterscheidende Geometrie aufweist
- ein Adapter-Gehäuse mit Mitteln zur lösbaren Befestigung des Sensoradapters an der Vorrichtung und mit Mitteln zur lösbaren Befestigung des Sensoradapters an dem Behälter, wobei der Sensoradapter derart an der Vorrichtung befestigbar ist, dass im an der Vorrichtung befestigten Zustand des Sensoradapters nur die Adapter-Messsonde des Sensoradapters mit dem Medium in Kontakt kommt, und
- jeweils eine Kontaktierungseinheit zur elektrischen Kontaktierung der Sensorelektrode und der Guardelektrode der Vorrichtung mit der Adapter-Sensorelektrode und der Adapter-Guardelektrode des Sensoradapters
umfasst.

Insbesondere findet der erfindungsgemäße Sensoradapter Anwendung im Falle von frontbündigen Messsonden und vorteilhaft ist handelt es sich auch bei der Adapter-Messsonde um eine frontbündige Messsonde.

Der Sensoradapter kann lösbar an der Vorrichtung befestigt, insbesondere auf die Vorrichtung aufgeschraubt werden. In diesem Fall weisen das Gehäuse des Sensoradapters sowie ein Gehäuse der Vorrichtung beispielsweise zueinander komplementäre Gewinde auf. Aber auch andere Befestigungen, wie beispielsweise Mittel zur Herstellung eines Klick- oder Klemmverschlusses sind denkbar und fallen gleichermaßen unter die vorliegende Erfindung. Darüber hinaus weist das Gehäuse des Sensoradapters in einer Ausgestaltung Mittel zur Befestigung des Sensoradapters am Behälter auf. In diesem Fall muss gegebenenfalls berücksichtigt werden, dass zur Anbringung der Vorrichtung mit Adapter am jeweiligen Behälter im Vergleich zur Anbringung der Vorrichtung ohne Adapter eine vergrößerte Öffnung im jeweiligen Behälter notwendig sein kann. Es ist zum einen denkbar, dass der Sensoradapter zuerst an der Vorrichtung angebracht wird, und anschließend die Vorrichtung mit dem Sensoradapter verbunden wird. Es ist aber auch möglich, zuerst den Sensoradapter an der Vorrichtung zu befestigen, und anschließend beide am jeweiligen Behälter anzubringen.

Der Sensoradapter wird bevorzugt derart an der Vorrichtung angebracht, dass durch den Adapter eine gegenüber der ursprünglichen Messsonde der Vorrichtung veränderte Adapter-Messsonde zum Einsatz kommt. Die eigentliche Messsonde ist insbesondere nach Befestigung des Sensoradapters dann nicht mehr in direktem Kontakt mit dem Medium, sondern lediglich mit der Adapter-Messsonde des Sensoradapters.

Durch eine geeignete Ausgestaltung des Sensoradapters kann so ein bestehendes Messgerät je nach gewünschter Anwendung geeignet nachgerüstet bzw. umgerüstet werden. Das bestehende Messgerät muss für die Nachrüstung nicht verändert werden. Die zumindest eine Adapter-Elektrode wird bei der Befestigung des Sensoradapters an der Vorrichtung mittels der Kontaktierungseinheit mit zumindest einer Sensorelektrode kontaktiert. Diese Kontaktierung kann in einer Ausgestaltung der Erfindung während des Befestigens des Sensoradapters an der Vorrichtung automatisch hergestellt werden. Dazu sind viele verschiedene Möglichkeiten denkbar. Beispielhaft sei die Verwendung von Biegestanzblechen angeführt, welche die elektrische Kontaktierung über eine durch das Befestigen des Sensoradapters hervorgerufene Federwirkung bewerkstelligen.

Entsprechend wird der Einsatzbereich des jeweiligen Messgeräts durch Verwendung des Sensoradapters deutlich erweitert. Die erfindungsgemäße Lösung ist aufgrund der Möglichkeit der Nachrüstung bestehender Messgeräte darüber hinaus einfach umsetzbar und kostengünstig.

Eine Adapter-Messsonde umfassend zumindest eine Adapter-Sensorelektrode und eine Adapter-Guardelektrode ist unter anderem vorteilhaft im Falle von anhaftenden Medien. Durch unterschiedliche Geometrien für die Adapter-Messsonde und die Messsonde ergibt sich ein besonderer Vorteil für den kapazitiven Betriebsmodus, für welchen die jeweilige Messauflösung empfindlich von der jeweiligen Geometrie der Messsonde sowie vom jeweils verwendeten Medium abhängt. So kann ein bestehendes Messgerät für eine neue Anwendung gezielt derart umgerüstet werden, dass die Adapter-Messsonde ideal auf das jeweilige Medium angepasst ist. In einer besonders bevorzugten Ausgestaltung ist die dem Medium zugewandte Oberfläche der Adapter-Messsonde derart ausgestaltet, dass die zumindest eine Adapter-Elektrode mediumsberührend ist. Im Falle, dass eine Adapter-Sensorelektrode und eine Adapter-Guardelektrode vorgesehen sind, sollten beide Elektroden mediumsberührend sein. Eine derartige Ausgestaltung erlaubt insbesondere im Falle eines nach dem konduktiven und/oder kapazitiven Messprinzip arbeitenden Geräts, dass auch bei Verwendung eines Sensoradapters beide Betriebsmoden verfügbar bleiben.

Alternativ ist es jedoch auch möglich, dass die dem Medium zugewandte Oberfläche der Adapter-Messsonde derart ausgestaltet ist, dass sie elektrisch isoliert, insbesondere aus einem isolierenden Material, insbesondere einem Kunststoff, beispielsweise PPS oder PEEK gefertigt ist. Insbesondere im Falle von aggressiven Medien bietet eine solche Ausgestaltung eine hohe chemische Beständigkeit und verlängert damit die Lebensdauer der Messsonde und Adapter-Messsonde. Für diese Variante können ferner an eine bestimmte Anwendung angepasste Materialien oder Beschichtungen auf den Sensoradapter aufgebracht werden, die beispielsweise die chemische Beständigkeit des Sensoradapters weiter erhöhen oder für besondere hygienische Anforderungen an das jeweilige Messgerät angepasst sind.

In einer bevorzugten Ausgestaltung des Sensoradapters schließt die

Adapter-Messsonde, insbesondere in Bezug auf die dem Medium zugewandte Oberfläche im Wesentlichen frontbündig, insbesondere frontbündig mit dem Behälter ab. Dies ist insbesondere vorteilhaft im Falle von Anwendungen, für welche Hygienestandards eingehalten werden müssen.

Die Adapter-Messsonde weist eine sich von der Geometrie der Messsonde unterscheidende Geometrie auf. Ein besonderer Vorteil ergibt sich hierbei für den kapazitiven Betriebsmodus, für welchen die jeweilige Messauflösung empfindlich von der jeweiligen Geometrie der Messsonde sowie vom jeweils verwendeten Medium abhängt. So kann ein bestehendes Messgerät für eine neue Anwendung gezielt derart umgerüstet werden, dass die Adapter-Messsonde ideal auf das jeweilige Medium angepasst ist. Es ist von Vorteil, wenn die dem Medium zugewandte Oberfläche der zumindest einen Adapter-Elektrode der Adapter-Messsonde größer ist als die korrespondierende Oberfläche zumindest einer Elektrode der Messsonde der Vorrichtung. Eine vergrößerte Elektrodenoberfläche geht oftmals ebenfalls mit einer vergrößerten Oberfläche der Adapter-Messsonde einher und erhöht vorteilhaft die Messempfindlichkeit insbesondere im kapazitiven Betriebsmodus, so dass eine mit einem geeigneten Sensoradapter versehene Vorrichtung auch für Medien mit Dielektrizitätskonstanten DK≤2 eingesetzt werden kann.

Es ist ferner von Vorteil, wenn die zumindest eine Adapter-Elektrode rotationssymmetrisch, insbesondere ringförmig, ausgestaltet sind. Aber auch eine ovale Ausführung wäre für bestimmte Anwendungen beispielsweise denkbar.

Eine Ausgestaltung sieht vor, dass die zumindest eine Adapter-Messsonde im dem Medium zugewandten Bereich eine konvexe Form aufweisen. Bei einer leichten Wölbung der Adapter-Messsonde bleibt diese im Wesentlichen frontbündig. Da die konvexe Ausgestaltung ebenfalls die dem jeweiligen Medium zugewandte Oberfläche der Adapter-Messsonde, insbesondere der zumindest einen Adapter-Elektrode vergrößert, kann auch durch diese Maßnahme die erreichbare Messauflösung erhöht werden.

Es ist von Vorteil, wenn die Adapter-Messsonde zumindest teilweise koaxial aufgebaut ist.

Eine bevorzugte Ausgestaltung sieht einen Überspannungsschutz vor, welcher im oder am Sensoradapter untergebracht ist. Dieser zusätzliche Überspannungsschutz hat die Aufgabe, den erhöhten Anforderungen an statische Aufladung, z.B. in Granulaten, gerecht zu werden und die Messelektronik vor energiereichen Entladungen zu schützen. Als Schutzelemente können vorzugsweise Gasentlader oder Suppressordioden zum Einsatz kommen. Ein Beispiel für eine geeignete schaltungstechnische Anordnung ist beispielsweise in der bisher unveröffentlichten deutschen Patentanmeldung mit dem Aktenzeichen 102014107927.2 offenbart.

Die erfindungsgemäße Aufgabe wird ferner gelöst durch eine Vorrichtung zur Bestimmung und/oder Überwachung zumindest einer Prozessgröße eines Mediums in einem Behälter, umfassend zumindest eine Messsonde mit zumindest einer Elektrode, eine Elektronikeinheit und einen Sensoradapter nach zumindest einem der vorhergehenden Ansprüche.

Bei der Vorrichtung handelt es sich insbesondere um ein nach dem kapazitiven und/oder konduktiven Messprinzip arbeitendes Messgerät, mittels welchem insbesondere Prozessgrößen wie beispielsweise ein Füllstand des Mediums, beispielsweise ein vorgegebener Füllstand, die elektrische Leitfähigkeit oder die Dielektrizitätskonstante bestimmt werden kann. Die Messsonde umfasst bevorzugt zumindest eine Messelektrode und eine Guardelektrode. Bevorzugt handelt es sich um eine im Wesentlichen frontbündige Ausgestaltung der Messsonde.

In einer Ausgestaltung sind der Sensoradapter und die Vorrichtung lösbar miteinander verbindbar. Dies bietet den Vorteil, dass im Falle eines Defekts an der Vorrichtung diese aus einem laufenden Prozess unterbrechungslos ausgebaut und repariert oder ausgetauscht werden kann, da der Sensoradapter, welcher in diesem Fall die medienberührende Komponente der Vorrichtung darstellt, im oder an dem jeweiligen Behälter verbleiben kann.

Der erfindungsgemäße Sensoradapter findet insbesondere Verwendung für ein Feldgerät zumindest zur Bestimmung und/oder Überwachung einer Prozessgröße nach dem kapazitiven und/oder konduktiven Messprinzip.

Die Erfindung wird anhand der nachfolgenden Figuren Fig. 1 bis Fig. 5 genauer beschrieben. Es zeigt:
Fig. 1 eine schematische Darstellung eines nach dem kapazitiven und/oder konduktiven Messprinzip arbeitenden Messgeräts,
Fig. 2 einen erfindungsgemäßen Sensoradapter (a) mit einer gegenüber dem Medium elektrisch isolierten Messsonde, und (b) mit einer mediumsberührenden Adapter-Elektrode mit einer konvexen Oberfläche,
Fig. 3 ein nach dem konduktiven und/oder kapazitiven Messmodus arbeitendes Feldgerät mit einem erfindungsgemäßen Adapter (a) vor und (b) nach der Befestigung des Sensoradapters am Feldgerät, und
Fig. 4 einen erfindungsgemäßen Sensoradapter mit Überspannungsschutz

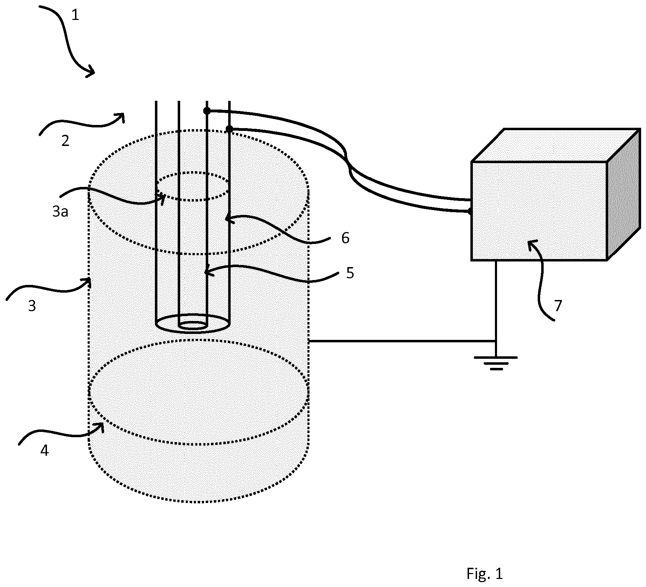

In Fig. 1 ist Messgerät 1 gemäß Stand der Technik gezeigt, mittels welchem eine Prozessgröße, wie beispielsweise ein vorgegebener Füllstand im kapazitiven oder konduktiven Messverfahren überwacht werden kann. Eine Messsonde 2 ist in einen Behälter 3 eingebracht, welcher zumindest teilweise mit einem Medium 4 gefüllt ist. In diesem Fall ist sie über eine Öffnung 3a in der Oberseite des Behälters 3 in diesen eingebracht. Im hier gezeigten Beispiel ragt die Messsonde 2 in den Behälter 3 hinein. Es versteht sich jedoch von selbst, dass auch frontbündige Messsonden möglich sind, welche im Wesentlichen mit der Bewandung des Behälters 3 abschließen, was insbesondere im Falle von Rohren oder Behältern mit kleinen von Vorteil sein kann. Die Messsonde 2 selbst setzt sich im vorliegenden Beispiel aus einer Sensorelektrode 5 und einer Guardelektrode 6 zusammen. Beide Elektroden sind elektrisch mit einer Elektronikeinheit 7 verbunden, welche zur Signalerfassung, -auswertung und/oderspeisung verantwortlich ist. Insbesondere bestimmt und/oder überwacht die Elektronikeinheit 7 anhand der im kapazitiven und konduktiven Betriebsmodus erzeugten Antwortsignale die jeweilige Prozessgröße, wie beispielsweise, ob ein vorgegebener Füllstand des Mediums 3 in dem Behälter 2 über und/oder unterschritten ist, und generiert eine entsprechende Meldung, bzw. löst einen entsprechenden Schaltvorgang aus.

Ohne Beschränkung der Allgemeinheit bezieht sich die nachfolgende Beschreibung auf eine Vorrichtung 1 und einen Sensoradapter 8 mit einer aus zumindest einer Sensorelektrode 5 und einer Guardelektrode 6 zusammengesetzten Messsonde 2. Es versteht sich jedoch von selbst, dass auch andere Ausgestaltungen einer Messsonde 2 und der jeweiligen dieser Messsonde 2 entsprechenden Adapter-Messsonde 9 möglich sind und gleichermaßen unter die vorliegende Erfindung fallen.

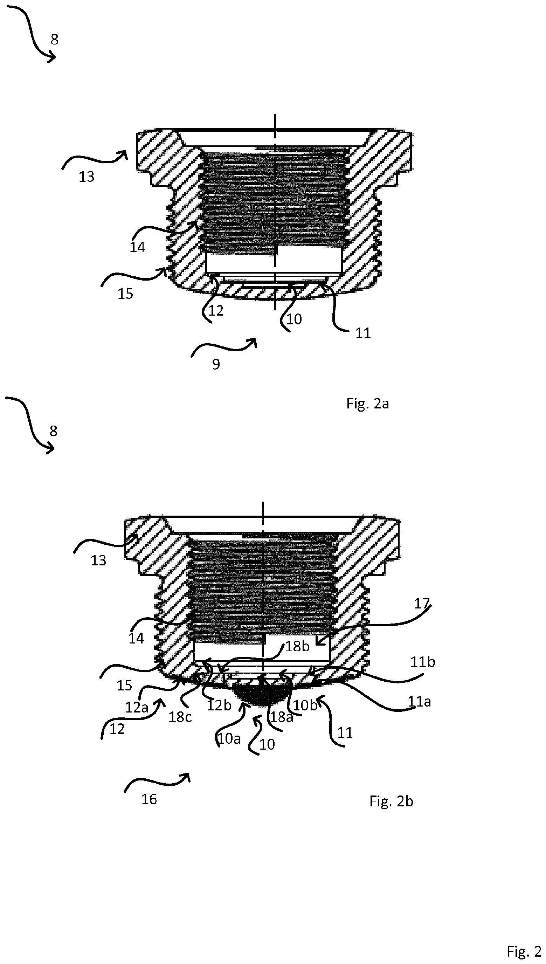

In Fig. 2a ist ein erfindungsgemäßen Sensoradapter 8 in einer Ausgestaltung mit einer gegenüber dem Medium 3 elektrisch isolierten Messsonde 2 gezeigt. Die Adapter-Messsonde 9 schließt im Wesentlichen mit der Wandung des Behälters ab. Es handelt sich also um eine im Wesentlichen frontbündige Adapter-Messsonde, welche eine Adapter-Sensorelektrode 10, eine Adapter-Guardelektrode 11 und eine Adapter-Masseverbindung 12 aufweist. Auf die Adapter-Masseverbindung kann im Prinzip für eine kompakte Anordnung auch verzichtet werden derart, dass die Masseverbindung über die Sensor-Masseanbindung [hier nicht gezeigt] hergestellt wird. Das Adapter-Gehäuse 13 weist ein Schraubgewinde 14 zur lösbaren Befestigung des Sensoradapters 8 an der Vorrichtung 1, und ein weiteres Schraubgewinde 15 zur lösbaren Befestigung des Sensoradapters 8 an einem Behälter 2 auf.

Eine zweite Ausführungsvariante für einen erfindungsgemäßen Sensoradapter 8 ist in Fig. 2b gezeigt. Im Unterschied zu der Ausführung gemäß Fig. 2a weist der Sensoradapter aus Fig. 2b eine mediumsberührende Adapter-Messsonde 9 auf. Auf bereits erläuterte Bezugszeichen wird entsprechend nicht erneut eingegangen. Die Adapter-Sensorelektrode 10 ist hier in einer konvexen Ausgestaltung aufgeführt. Dies führt zu einer weiteren Vergrößerung der dem Medium 3 zugewandten Elektrodenoberfläche und damit zu einer erhöhten Empfindlichkeit in Bezug auf die Messung.

Die Adapter-Sensorelektrode 10, die Adapter-Guardelektrode und die Adapter-Masseanbindung 12 sind jeweils zweiteilig ausgeführt. Neben den im Außenbereich 16 angeordneten Außenelektrodenteilen 10a,11a,12a sind im Innenbereich 16 des Sensoradapters 8 entsprechende Innenelektrodenteile 10b, 11b, 12b angeordnet, welche jeweils über eine elektrische Kontaktierung 18a, 18b, 18c durch das Gehäuse 13 des Sensoradapters 8 hindurch miteinander kontaktiert sind. Über die Innenelektrodenteile 10b, 11b, 12b wird die Adapter-Messsonde 9 mit einer entsprechenden Messsonde 4 der entsprechenden Vorrichtung 1 kontaktiert. Dabei können die Innenelektrodenteile 10b, 11b, 12b entweder selbst als Kontaktierungseinheit fungieren, oder es kann eine separate Kontaktierungseinheit [nicht extra gezeigt] an jede der Adapter-Elektroden 10,11,12 angebracht werden, beispielsweise in Form von Biegestanzblechen, welche mittels einer Federwirkung einen elektrischen und mechanischen Kontakt zwischen den Elektroden 10,11,12 der Adapter-Messsonde 9 und den jeweils komplementären Elektroden 5,6 der Messsonde 2 der Vorrichtung 1 herstellen.

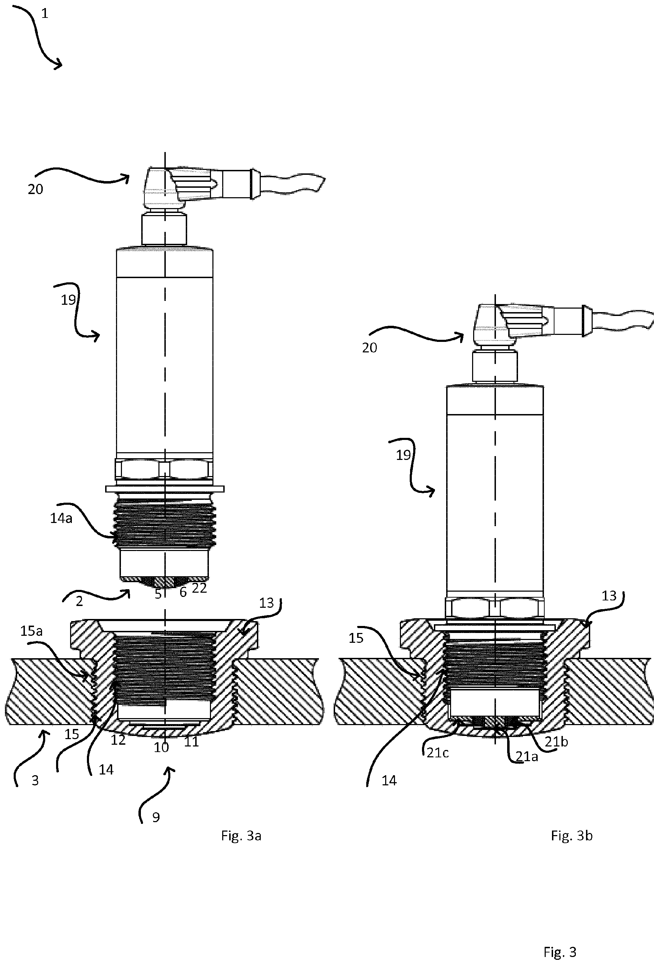

Fig. 3a zeigt schließlich ein nach dem konduktiven und/oder kapazitiven Messmodus arbeitendes Feldgerät 1 mit einer im Wesentlichen frontbündigen Messsonde 2 und einen in einer Öffnung 3a des Behälters 3 angebrachten Sensoradapter 8. Die Elektronikeinheit 6 des Messgeräts 1 ist in diesem Falle in einem Gehäuse 19 in einer Kompaktbauweise zusammen mit der Messsonde 2 eingefasst. Auf der der Messsonde 2 gegenüberliegenden Seite des Gehäuses ist ein Anschlussstecker 20 zum Anschluss des Messgeräts 1, beispielsweise an einem Prozessleitsystem (nicht gezeigt). Auf bereits erläuterte Bezugszeichen wird auch in Zusammenhang mit Fig. 3 nicht erneut eingegangen.

Das Schraubgewinde 15 zur Befestigung des Sensoradapters 8 am Behälter 3 ist derart ausgestaltet, dass es komplementär zu dem am Behälter 3 vorhanden Schraubgewinde 15 a ist. Ähnlich ist das Schraubgewinde 14 zur Befestigung des Sensoradapters 8 an der Vorrichtung 1 derart ausgestaltet, dass es komplementär zu dem Schraubgewinde am Messgerät 1 ist.

Die Messsonde 2 des Messgeräts weist eine Sensorelektrode 5, eine Guardelektrode 6, und eine Masseverbindung 22 auf. Die Adapter-Messsonde 9 weist entsprechend eine auf die Elektroden 5,6,22 des Messgeräts 1 abgestimmte Adapter-Sensorelektrode 10, Adapter-Guardelektrode und Adapter-Masseverbindung 12 auf, und ist wie in Fig. 2a derart ausgestaltet, dass die Elektroden 10,11,12 gegenüber dem Medium 3 elektrisch isoliert sind.

Fig. 3b zeigt den Sensoradapter 8 und das Messgerät 1 aus Fig. 3a, jedoch ist für Fig. 3b der Sensoradapter 8 ebenfalls am Messgerät 1 befestigt. Aus Gründen der Übersichtlichkeit sind für Fig. 3b nicht alle Bezugszeichen aus Fig. 3a wiederholt eingezeichnet.

Der Kontakt zwischen den Elektroden 5,6,22 des Messgeräts 1 und den Adapter-Elektroden 10,11,12 des Sensoradapters 8 wird durch die Kontaktierungen 21a,21b,21c hergestellt. Hierbei handelt es sich beispielsweise um Biegestanzteile, welche durch das Einschrauben des Messgeräts 1 in den Sensoradapter 8 einen elektrischen und mechanischen Kontakt über eine Federwirkung herstellen. Alternativ kann eine Kontaktierung im Falle zweiteilig ausgeführter Elektroden 10,11,12 des Sensoradapters 8 auch über die jeweiligen Elektrodeninnenteile 10a,11a,11b erfolgen.

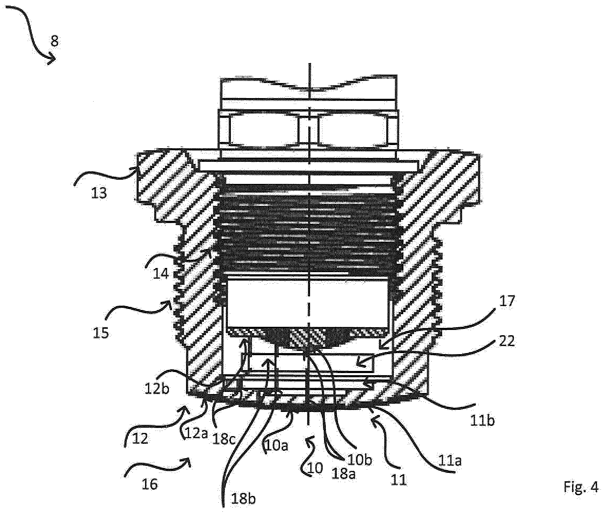

In Fig. 4 ist schließlich eine weitere Ausgestaltung für einen erfindungsgemäßen Sensoradapter 8 dargestellt. Dieser Sensoradapter verfügt über eine mediumsberührende Messsonde 9 mit einer Adapter-Sensorelektrode 10, einer Adapter-Guardelektrode und einer Adapter-

Masseverbindung, ähnlich wie in Fig. 2b. Im Unterschied zu Fig. 2b ist jedoch zum einen die Adapter-Sensorelektrode nicht konvex ausgeführt. Außerdem ist in dem Sensoradapter 8 aus Fig. 4 ein Überspannungsschutz 22 in Form eines Ableitwiderstandes integriert. Die Eleketroden 10,11,12 der Adapter-Messsonde 9 sind wie in Fig. 2b zweiteilig ausgeführt, d.h. sie setzten sich aus den im Außenbereich 16 angeordneten Außenelektrodenteilen 10a,11a,12a und den im Innenbereich 16 des Sensoradapters 8 angeordneten Innenelektrodenteile 10b, 11b, 12b zusammen. Im Unterschied zu Fig. 2b sind die Kontaktierungen 18a, 18b, 18c zwischen den Außenelektrodenteilen 10a,11a,12a und den Innenelektrodenteilen 101b, 11b, 12b ebenfalls zweiteilig ausgeführt derart, dass die Außenelektrodenteilen 10a, 11a, 12a und Innenelektrodenteilen 101b, 11b, 12b über den Überspannungsschutz 22 miteinander verbunden sind.

### Bezugszeichen

- 1: Vrrichtung/Feldgerät
- 2: Messsonde
- 3: Behälter, 3a Öffnung im Behälter
- 4: Medium
- 5: Sensorelektrode
- 6: Guardelektrode
- 7: Elektronikeinheit
- 8: Sensoradapter
- 9: Adapter-Messsonde
- 10: Adapter-Sensorelektrode
- 11: Adapter-Guardelektrode
- 12: Adapter-Masseverbindung
- 13: Adapter-Gehäuse
- 14: Schraubgewinde zur lösbaren Befestigung des Adapters an der Vorrichtung
- 15: Schraubgewinde zur lösbaren Befestigung des Adapters am Behälter
- 16: Außenbereich
- 17: Innenbereich
- 18: a,b,c Kontaktierungen zwischen den Elektrodenteilen des Sensoradapters
- 19: Gehäuse der Vorrichtung
- 20: Anschlussstecker
- 21: a,b,c Kontaktierungen zur Kontaktierung der Elektroden der Messsonde mit den Elektroden der Adapter-Messsonde
- 22: Überspannungsschutz

## Patentansprüche

1. Sensoradapter (8) für eine nach dem kapazitiven und/oder konduktiven Messprinzip arbeitenden Vorrichtung (1) zur Bestimmung und/oder Überwachung zumindest einer Prozessgröße eines Mediums (4) in einem Behälter (3) mit einer Messsonde (2) umfassend eine Sensorelektrode (5) und eine Guardelektrode (6), wobei der Sensoradapter (8) zumindest
- eine Adapter-Messsonde (9) mit zumindest einer Adapter-Sensorelektrode (10) und einer Adapter-Guardelektrode (11),
wobei die Adapter-Messsonde (9) eine sich von der Geometrie der Messsonde (2) unterscheidende Geometrie aufweist,
- ein Adapter-Gehäuse (13) mit Mitteln (14) zur lösbaren Befestigung des Sensoradapters (8) an der Vorrichtung (1) und mit Mitteln zur lösbaren Befestigung des Sensoradapters (8) an dem Behälter (3),
wobei der Sensoradapter (8) derart an der Vorrichtung (1) befestigbar ist, dass im an der Vorrichtung (1) befestigten Zustand des Sensoradapters (8) nur die Adapter-Messsonde (9) des Sensoradapters (8) mit dem Medium (4) in Kontakt kommt und
- jeweils eine Kontaktierungseinheit (10b, 11b, 12b, 21a, 21b, 21c) zur elektrischen Kontaktierung der Sensorelektrode (5) und der Guardelektrode (6) der Vorrichtung (1) mit der Adapter-Sensorelektrode (10) und der Adapter-Guardelektrode (11) des Sensoradapters (8)
umfasst.

2. Sensoradapter (8) nach Anspruch 1,
wobei die dem Medium (4) zugewandte Oberfläche der Adapter-Messsonde (9) derart ausgestaltet ist, dass die zumindest eine Adapter-Elektrode (10,11,12) mediumsberührend ist.

3. Sensoradapter (8) nach zumindest einem der vorangehenden Ansprüche,
wobei die dem Medium (4) zugewandte Oberfläche der Adapter-Messsonde (9) derart ausgestaltet ist, dass sie elektrisch isoliert, insbesondere aus einem isolierenden Material, insbesondere einem Kunststoff, beispielsweise PPS oder PEEK gefertigt ist.

4. Sensoradapter (8) nach zumindest einem der vorhergehenden Ansprüche,
wobei die Adapter-Messsonde (9), insbesondere in Bezug auf die dem Medium (4) zugewandte Oberfläche im Wesentlichen frontbündig, insbesondere frontbündig mit dem Behälter (3) abschließt.

5. Sensoradapter (8) nach Anspruch 1,
wobei die dem Medium (4) zugewandte Oberfläche der zumindest einen Adapter-Elektrode (10,11,12) der Adapter-Messsonde (9) größer ist als die korrespondierende Oberfläche zumindest einer Elektrode (5,6,22) der Messsonde (2) der Vorrichtung (1).

6. Sensoradapter (8) nach zumindest einem der vorhergehenden Ansprüche,
wobei die zumindest eine Adapter-Elektrode (10,11,12) rotationssymmetrisch, insbesondere ringförmig, ausgestaltet sind.

7. Sensoradapter (8) nach zumindest einem der vorhergehenden Ansprüche,
wobei die zumindest eine Adapter-Elektrode (10,11,12) im dem Medium (4) zugewandten Bereich eine konvexe Form aufweisen.

8. Sensoradapter (8) nach zumindest einem der vorangehenden Ansprüche,
wobei die Adapter-Messsonde (9) zumindest teilweise koaxial aufgebaut ist.

9. Sensoradapter (8) nach zumindest einem der vorangehenden Ansprüche,
wobei ein Überspannungsschutz (22) vorgesehen ist.

10. Vorrichtung (1) zur Bestimmung und/oder Überwachung zumindest einer Prozessgröße Mediums (4) in einem Behälter (3), umfassend zumindest eine Messsonde (2) mit zumindest einer Elektrode (5,6,22), eine Elektronikeinheit (6) und einen Sensoradapter (8) nach zumindest einem der vorhergehenden Ansprüche.

11. Vorrichtung (1) nach Anspruch 10,
wobei der Sensoradapter (8) lösbar mit der Vorrichtung (1) verbindbar ist.

12. Vorrichtung (1) nach Anspruch 11,
wobei die Prozessgröße gegeben ist durch einen Füllstand , die elektrische Leitfähigkeil
oder die Dielektrizitätskonstante des Mediums.

13. Verwendung eines Sensoradapters (8) nach einem der Ansprüche 1-9 für ein Feldgerät (1) zumindest zur Bestimmung und/oder Überwachung einer Prozessgröße nach dem kapazitiven und/oder konduktiven Messprinzip.

## Claims

1. Sensor adapter (8) for an apparatus (1) that works according to the capacitive and/or conductive measuring principle and is designed to determine and/or monitor at least one process variable of a medium (4) in a vessel (3) with a measuring probe (2) comprising a sensor electrode (5) and a guard electrode (6), wherein the sensor adapter (8) comprises at least:
- an adapter measuring probe (9) with at least an adapter sensor electrode (10) and an adapter guard electrode (11),
wherein the adapter measuring probe (9) has a geometry that is different to the geometry of the measuring probe (2),
- an adapter housing (13) with the means (14) to secure, in a detachable manner, the sensor adapter (8) on the apparatus (1) and with the means to secure, in a detachable manner, the sensor adapter (8) on the vessel (3),
wherein the sensor adapter (8) can be secured to the apparatus (1) in such a way that, when the sensor adapter (8) is secured on the apparatus (1), only the adapter measuring probe (9) of the sensor adapter (8) comes into contact with the medium (4) and
- comprises, in each case, a contacting unit (10b, 11b, 12b, 21a, 21b, 21c) for the electrical contacting of the sensor electrode (5) and the guard electrode (6) of the apparatus (1) with the adapter sensor electrode (10) and the adapter guard electrode (11) of the sensor adapter (8).

2. Sensor adapter (8) as claimed in Claim 1,
wherein the surface of the adapter measuring probe (9) facing towards the medium (4) is designed in such a way that the at least one adapter electrode (10, 11, 12) is in contact with the medium.

3. Sensor adapter (8) as claimed in at least one of the previous claims,
wherein the surface of the adapter measuring probe (9) facing towards the medium (4) is designed in such a way that it is electrically isolated, particularly made from an insulating material, particularly a plastic material, for example PPS or PEEK.

4. Sensor adapter (8) as claimed in at least one of the previous claims,
wherein the adapter measuring probe (9) terminates essentially in a flush-mount manner, particularly in relation to the surface facing towards the medium (4), particularly in a manner that is flush-mount with the vessel (3).

5. Sensor adapter (8) as claimed in Claim 1,
wherein the surface, facing towards the medium (4), of the at least one adapter electrode (10, 11, 12) of the adapter measuring probe (9) is larger than the corresponding surface of the at least one electrode (5, 6, 22) of the measuring probe (2) of the apparatus (1).

6. Sensor adapter (8) as claimed in at least one of the previous claims,
wherein the at least one adapter electrode (10, 11, 12) is designed to be rotationally symmetric, particularly ring-shaped.

7. Sensor adapter (8) as claimed in at least one of the previous claims,
wherein the at least one adapter electrode (10, 11, 12) has a convex shape in the area facing towards the medium (4).

8. Sensor adapter (8) as claimed in at least one of the previous claims,
wherein the adapter measuring probe (9) is at least partially coaxial.

9. Sensor adapter (8) as claimed in at least one of the previous claims,
wherein overvoltage protection (22) is provided.

10. Apparatus (1) for determining and/or monitoring at least one process variable of a medium (4) in a vessel (3), wherein said apparatus comprises at least a measuring probe (2) with at least one electrode (5, 6, 22), an electronic unit (6) and a sensor adapter (8) as claimed in at least one of the previous claims.

11. Apparatus (1) as claimed in Claim 10,
wherein the sensor adapter (8) can be connected to the apparatus (1) in a detachable manner.

12. Apparatus (1) as claimed in Claim 11,
wherein the process variable is given by a level, the electrical conductivity or the dielectric constant of the medium.

13. Use of a sensor adapter (8) as claimed in one of the Claims 1 to 9 for a field device (1) at least for the determination and/or monitoring of a process variable according to the capacitance and/or conductive measuring principle.

## Revendications

1. Adaptateur de capteur (8) pour un dispositif (1) fonctionnant selon le principe de mesure capacitif et/ou conductif destiné à la détermination et/ou à la surveillance d'au moins une grandeur de process d'un produit (4) dans un réservoir (3) avec une sonde de mesure (2) comprenant une électrode de capteur (5) et une électrode de garde (6), l'adaptateur de capteur (8) comprenant au moins
- une sonde de mesure d'adaptateur (9) avec au moins une électrode de capteur d'adaptateur (10) et une électrode de garde d'adaptateur (11),
la sonde de mesure d'adaptateur (9) présentant une géométrie différente de la géométrie de la sonde de mesure (2),
- un boîtier d'adaptateur (13) avec des moyens (14) pour la fixation amovible de l'adaptateur de capteur (8) sur le dispositif (1) et avec des moyens pour la fixation amovible de l'adaptateur de capteur (8) sur le réservoir (3),
l'adaptateur de capteur (8) pouvant être fixé sur le dispositif (1) de telle sorte que, dans l'état fixé de l'adaptateur de capteur (8) au dispositif (1), seule la sonde de mesure d'adaptateur (9) de l'adaptateur de capteur (8) vient en contact avec le produit (4) et
- respectivement une unité de mise en contact (10b, 11b, 12b, 21a, 21b, 21c) pour la mise en contact électrique de l'électrode de capteur (5) et de l'électrode de garde (6) du dispositif (1) avec l'électrode de capteur d'adaptateur (10) et l'électrode de garde d'adaptateur (11) de l'adaptateur de capteur (8).

2. Adaptateur de capteur (8) selon la revendication 1,
pour lequel la surface de la sonde de mesure d'adaptateur (9) tournée vers le produit (4) est conçue de telle sorte que l'au moins une électrode d'adaptateur (10, 11, 12) est en contact avec le produit.

3. Adaptateur de capteur (8) selon au moins l'une des revendications précédentes,
pour lequel la surface de la sonde de mesure d'adaptateur (9) tournée vers le produit (4) est conçue de telle sorte qu'elle est isolée électriquement, notamment fabriquée dans un matériau isolant, notamment une matière plastique, par exemple PPS ou PEEK.

4. Adaptateur de capteur (8) selon au moins l'une des revendications précédentes,
pour lequel la sonde de mesure d'adaptateur (9) se termine, notamment par rapport à la surface tournée vers le produit (4), pour l'essentiel de façon affleurante, notamment de façon affleurante avec le réservoir (3).

5. Adaptateur de capteur (8) selon la revendication 1,
pour lequel la surface, tournée vers le produit (4), de l'au moins une électrode d'adaptateur (10, 11, 12) de la sonde de mesure d'adaptateur (9) est plus grande que la surface correspondante d'au moins une électrode (5, 6, 22) de la sonde de mesure (2) du dispositif (1).

6. Adaptateur de capteur (8) selon au moins l'une des revendications précédentes,
pour lequel l'au moins une électrode d'adaptateur (10, 11, 12) est conçue avec une symétrie de rotation, notamment en forme d'anneau.

7. Adaptateur de capteur (8) selon au moins l'une des revendications précédentes,
pour lequel l'au moins une électrode d'adaptateur (10, 11, 12) présente une forme convexe dans la zone tournée vers le produit (4).

8. Adaptateur de capteur (8) selon au moins l'une des revendications précédentes,
pour lequel la sonde de mesure d'adaptateur (9) est au moins partiellement coaxiale.

9. Adaptateur de capteur (8) selon au moins l'une des revendications précédentes,
pour lequel est prévue une protection contre les surtensions (22).

10. Dispositif (1) destiné à la détermination et/ou à la surveillance d'au moins une grandeur de process d'un produit (4) dans un réservoir (3), lequel dispositif comprend au moins une sonde de mesure (2) avec au moins une électrode (5, 6, 22), une unité électronique (6) et un adaptateur de capteur (8) selon au moins l'une des revendications précédentes.

11. Dispositif (1) selon la revendication 10,
pour lequel l'adaptateur de capteur (8) peut être relié de manière amovible au dispositif (1).

12. Dispositif (1) selon la revendication 11,
pour lequel la grandeur de process est un niveau, la conductivité électrique ou la constante diélectrique du produit.

13. Utilisation d'un adaptateur de capteur (8) selon l'une des revendications 1 à 9 pour un appareil de terrain (1) au moins destiné à la détermination et/ou à la surveillance d'une grandeur de process selon le principe de mesure capacitif et/ou conductif.
